(19) **Europäisches Patentamt**
**European Patent Office**
**Office européen des brevets**

(11) Veröffentlichungsnummer : **0 238 855 B1**

(12) # EUROPÄISCHE PATENTSCHRIFT

(45) Veröffentlichungstag der Patentschrift :
**28.08.91 Patentblatt 91/35**

(51) Int. Cl.⁵ : **B01D 53/06, F15D 1/04,**
**B01D 53/34**

(21) Anmeldenummer : **87102420.4**

(22) Anmeldetag : **20.02.87**

(54) **Vorrichtung zur Reinigung von Gasströmen.**

(30) Priorität : **27.03.86 DE 3610453**

(43) Veröffentlichungstag der Anmeldung :
**30.09.87 Patentblatt 87/40**

(45) Bekanntmachung des Hinweises auf die
Patenterteilung :
**28.08.91 Patentblatt 91/35**

(84) Benannte Vertragsstaaten :
**AT BE CH DE GB IT LI NL SE**

(56) Entgegenhaltungen :
**CH-A- 293 221**
**DE-A- 3 304 344**
**DE-C- 588 113**

(73) Patentinhaber : **Uhde GmbH**
**Friedrich-Uhde-Strasse 15**
**W-4600 Dortmund 1 (DE)**

(72) Erfinder : **Buxel, Michael, Dipl.-Ing**
**Zum Gehölz 5b**
**W-4355 Waltrop (DE)**
Erfinder : **Thieme, Horst**
**Düsseldorfer Strasse 17**
**W-4600 Dortmund 1 (DE)**
Erfinder : **Pietzarka, Friedrich-Wilhelm, Dr.**
**Dipl.-Chem.**
**Gögestrasse 11**
**W-4600 Dortmund 50 (DE)**
Erfinder : **Koch, Manfred Ing. grad.**
**Poststrasse 57**
**W-4755 Holzwickede (DE)**

## Beschreibung

Die Erfindung betrifft eine Vorrichtung zur Reinigung von Gasströmen, insbesondere von Rauchgasen aus Feuerungsanlagen, mit mehrstufiger Entschwefelung und zwischengeschalteter Entstickung in quer angeströmten Wanderbetten aus körnigen, kohlenstoffhaltigen Materialien und längsdurchströmter Zumischkammer für Entstickungsmittel.

Solche Vorrichtungen sind beispielsweise beschrieben in der DE-A-3604204, DE-A-3101053, DE-C-2721588 und DE-C-2540141.

Sollen Rauchgase aus industriellen Feuerungsanlagen gereinigt werden, werden wegen der Limitierung der Strömungsgeschwindigkeit durch adsorptiv wirkende Wanderbetten aus körnigem, kohlenstoffhaltigen Material, in der Regel sehr großflächig durchströmte Adsorptionsapparate notwendig. Weiterhin ergibt sich in der Praxis häufig der Fall, daß solche Reinigungsvorrichtungen auf einem eng begrenzten Platz gegebenenfalls innerhalb schon bestehender Gebäude und Einrichtungen aufgestellt werden müssen. Dieses führt dazu, daß die Gasführung in der Regel mehrere scharfe Umlenkungen sowie Querschnittsverengungen und/oder -erweiterungen auf sehr kurzen Strecken erfordert. Der Betrieb solcher Anlagen mit körnigen, kohlenstoffhaltigen Materialien erfordert es, daß das gesamte Wanderbettvolumen im Hinblick auf die Möglichkeit der Entstehung von lokalen Bettüberhitzungen mit mindestens einer gewissen unteren Strömungsgeschwindigkeit durchströmt wird. Da für das körnige, kohlenstoffhaltige Material in bestimmten Vorrichtungen nach dem Stand der Technik auch eine maximal mögliche Durchströmungsgeschwindigkeit im Hinblick auf die Austragung von Feststoff aus dem Wanderbett gegeben ist, wird darüber hinaus eine möglichst gleichmäßige Durchströmung des gesamten Wanderbettvolumens gefordert. Bei zweistufigen Rauchgasreinigungsanlagen zur Entschwefelung mit zwischengeschalteter Entstickung von Rauchgasen aus Kraftwerken mit entsprechend hohen Schwefeldioxid- und Stickoxidanteilen werden Bettiefen je Wanderbett von rd. 1-3 m, je nach den Konzentrationsverhältnissen der Schadstoffe und Zuström- bzw. Abströmflächen von über 20 m$^2$ vorgesehen. Dabei werden Abscheideleistungen erreicht, die zu Emissionswerten führen, welche den derzeit geltenden gesetzlichen Auflagen genügen.

Für den Betrieb einer Wanderbettadsorption sind bei konstanter Bettiefe neben der Rauchgasmenge, die Rauchgasdichte und die Rauchgasgeschwindigkeit die Hauptvariablen.

Die Rauchgasdichte wird bestimmt durch die Verbrennungsstöchiometrie, die Führung der Verbrennung in der Feuerung sowie gegebenenfalls zudosierter Überschußluft. Die Strömungsgeschwindigkeit des Rauchgases ist direkt abhängig von der in der Feuerung gefahrenen Last. Da die Strömungsgeschwindigkeit quadratisch in den Druckverlust eingeht, ist das Durchströmungsverhalten stark von der Strömungsgeschwindigkeit abhängig. Läßt es sich in der Praxis z.B. durch Beschränkungen der Feuerungsfahrweise innerhalb bestimmter Lastgrenzen nicht erreichen, daß ein für die geometrische Anordnung der Rauchgasreinigungsanlage kritischer Druckverlustwert bei kleinen Lasten unterschritten wird, kann lokal die für die irreversible Aufheizung des körnigen, kohlenstoffhaltigen Materials kritische minimale Durchströmungsgeschwindigkeit unterschritten werden. Eine thermisch sichere Fahrweise ist in diesen Fällen nicht mehr gewährleistet.

In dem Verfahren und der Vorrichtung, beschrieben in der DE-A-3604204 trifft das zuvor Gesagte auch zu für die Anströmung einer Prozeßkammer hinter einem Wanderbett, wenn sie dicht hinter einer steilen Einengung des Abströmkanals angeordnet ist, insbesondere auch wenn darüber hinaus der Abströmkanal asymetrisch eingezogen wird.

Aus der DE-C-588113 ist eine Leitflächenanordnung für offene und geschlossene Kanäle bekannt, die segelartig gestaffelte Leitflächen betrifft. Diese Anordnung unterteilt der Gesamtkanal im Bereich der schroffen Querschnittsübergänge durch eine oder mehrere segel- oder spaltflügelartig gestaffelte Leitflächengruppen in Teilkanäle, wobei der größere Querschnitt stromab liegt. Die Einzelleitflächen überdecken sich nur auf einem mäßigen Bruchteil ihrer Länge und die jeweils stromabliegende Leitfläche liegt jeweils dem Krümmungsmittelpunkt der Strömung näher als die benachbarte, weiter stromaufliegende Leitfläche. Somit entstehen Teilkanäle, die frische, vorher gestaute und anschließend beschleunigte Strömung jeweils auf den Rücken der folgenden Fläche lenken, so daß dort jeder Ansatz von Totwasserströmung sofort weggeblasen wird und die Gesamtströmung frei von größeren Wirbeln erhalten wird.

Die vorliegende Erfindung richtet sich jedoch auf Kanäle mit einer steilen Einengung zur beschleunigten Anströmung einer Prozeßkammer hinter einem Wanderbett. Aufgabe der Erfindung ist es, die über den großen Querschnitt gleichförmige Anströmung der Wanderbettern auch bei kleinen Lasten, d.h. bei sehr kleinen Strömungsgeschwindigkeiten sicherzustellen.

Bei der segelartig gestaffelten Leitflächenanordnung aus DE-C-588113 kann diese angestrebte Wirkung nicht eintreten, weil bei sehr kleinen Strömungsgeschwindigkeiten die kinetische Energie der Strömung nicht ausreicht, die Totwasserströmung vom Rücken der folgenden Fläche wegzublasen. Speziell für die Fälle sehr kleiner Strömungsgeschwindigkeiten sind also die erfindungsgemäßen kanalbildenden Trennbleche gegenüber der segelartig gestaffelten Leitflächenanordnung von Vorteil.

EP 0 238 855 B1

Aus der CH-A-293221 ist ein Rohrkrümmer bekannt, der plattenförmige, unprofilierte Umlenkschaufeln besitzt. Die Umlenkschaufeln bilden ein Schaufelgitter, das an der Trennstelle eines stromaufwärts- und eines stromabwärts liegenden Rohrteiles angeordnet ist. An der Trennstelle sind die Rohrteile unter einem Winkel zusammengefegt.

Die gegenseitigen Abstände der Umlenkschaufeln im Schaufelgitter bilden eine geometrische Reihe, an der Innenseite des Rohrkrümmers besitzt der Schaufelabstand den kleinsten Wert. Die Schaufeln sind nun so gestaltet und angestellt, daß der konvergente Durchlaß auf der Innenseite des Krümmers dem durchströmenden Medium eine kleine Bewegungkomponente in Richtung gegen die Innenwand des Krümmers erteilt. Dadurch wird ein Ablösen der Strömung von dieser Innenwand verhindert. Bei sehr kleinen Strömungsgeschwindigkeiten, auf die sich die hier nachfolgend beschriebene Erfindung bezieht, kann in dem Schaufelgitter die angestrebte kleine Bewegungskomponente in Richtung auf die Innenwand nicht erteilt werden, weil die Energie der Strömung dazu nicht ausreicht. Deshalb sind demgegenüber die erfindungsgemäßen kanalbildenden Trennwände von Vorteil.

Der Erfindung liegt die Aufgabe zugrunde, die Flexibilität des Einsatzes von Wanderbettadsorptionsapparaten bei mehrstufiger Ausführung, insbesondere unter geometrisch schwierigen Verhältnissen, hinsichtlich des Betriebes bei kleinen Lasten zu erhöhen.

Dies wird mit der erfindungsgemäßen Vorrichtung gemäß Patentanspruch 1 erreicht.

Der Eintrittsquerschnitt der Zumischkammer wird gleichmäßig angeströmt, wodurch in der Zumischkammer eine gleichmäßige Vermischung erreicht wird. Für die Abströmseite der Zumischkammer, demgemäß für die Anströmseite des folgenden Wanderbettes gilt analog die gleichmäßige Verteilung.

Im einzelnen ergeben sich folgende Vorteile :

Bei minimalen Lasten der Feuerungsanlage kann für die gegebene geometrische Anordnung, der charakteristische dimensionslose Druckverlust, der das Auftreten von ungleichmäßigen Durchströmungen des Wanderbettes kennzeichnet, unterschritten werden. Niedrige Lastfälle der Feuerungsanlage sind möglich.

Dem Entstehen von lokalen Überhitzungen im Wanderbett, aufgrund mangelnder Durchströmung, wird wirksam vorgebeugt. Dementsprechend ist die Betriebssicherheit bei kleinen Lasten erhöht.

Im Gasweg zwischen zwei Wanderbetten gegebenenfalls eingebaute Prozeßkammern können ebenfalls auf der Anströmseite gleichmäßig angeströmt werden. Darin vorgenommene verfahrenstechnische Operationen, wie z.B. Vermischung, werden dadurch optimiert.

Durch die Wahl einer entsprechenden Anzahl von Trennwänden und eine entsprechende lokale Anordnung wird der durch eine extreme Spreizung der Strömung gekennzeichnete Anströmkanal eines Wanderbettes in Teilkanäle unterteilt, so daß strömungsgünstige Diffusoren entstehen, die es ermöglichen, in optimaler Weise die kinetische Energie des einströmenden Gases in einen Druckgewinn umzuwandeln. Strömungsabriß mit entsprechenden Druckverlusten wird vermieden.

Da es durch die individuelle Anpassurg der Geometrie einer entsprechenden Rauchgasreinigungsanlage an die Feuerungsanlage und den vorhandenen Platz in der Praxis nahezu eine beliebige Vielfalt von Geometrien geben kann, ist es von besonderem Vorteil, daß mit aus der jeweiligen Planung entwickelten, in der Regel zweidimensionalen Strömungsmodellen und Messungen des Verlaufs der Strömungslinien der Potentialströmungen eine Anordnung parallel zu diesen Linien gefunden wird, die unter Berücksichtigung der Ähnlichkeitsgesetze auf die tatsächliche Anlage übertragen werden kann.

Um zu einer Optimierung der Strömung zu kommen, wird erfindungsgemäß die Zahl der Kanäle bzw. die Zahl der Trennbleche bei gegebener Kanallänge so gewählt, daß für mindestens einen entstandenen Kanal der Ausdruck

$$0,01 < \frac{\left| \text{Austrittsweite} - \text{Eintrittsweite} \right|}{2 \times \text{Kanallänge}} < 0,15$$

erfüllt ist.

Der obige Ausdruck kann für die Kanalerweiterungen oder für die Kanalverengungen gelten.

Nach weiteren Ausgestaltungen der Erfindung sind die Kanalbildenden Trennbleche in Richtung der Stromlinien der Potentionalströmung ausgerichtet, was auch bedeuten kann, daß sie gekrümmt sind.

Diese erfindungsgemäßen Ausgestaltungen führen zu verbesserten Strömungsbildern und damit zu verbesserter Reinigung der Gasströme, bzw. ermöglichen sie eine exakte Dimensionierung der Anlage.

Soll für eine Vorrichtung zur Reinigung von Gasströmen bei einer vorliegenden geometrischen Anordnung der einzelnen Stufen die lokale Anordnung der raumaufteilenden Zwischenwände festgelegt werden, wird dies

3

EP 0 238 855 B1

in einem speziellen Modellversuch ermittelt.

Wählt man den dimensionslosen Druckverlust

$$\zeta = \Delta p/(\rho/2 * V^2)$$

als Vergleichsbasis,

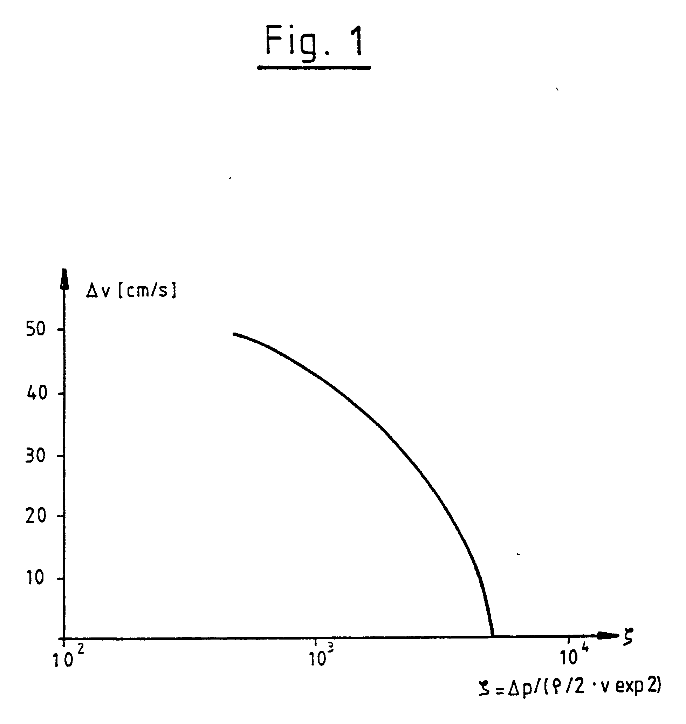

stellt man fest, daß bei kurzer großer Spreizung der Gasströmung auf eine Anströmfläche die gleichmäßige Verteilung der Durchtrittsgeschwindigkeit über die Anströmfläche als Funktion des dimensionslosen Druckverlustes aufgetragen werden kann. Überschreitet der dimensionslose Druckverlust einen bestimmten Grenzwert, sinken die lokalen Unterschiede der Durchtrittsgeschwindigkeiten ausgedrückt durch die Differenz zwischen größter und kleinster gefunderer Geschwindigkeit unterhalb der Meßgenauigkeit ab. Dies bedeutet, es existiert für eine gegebene Geometrie ein kritischer Zeta-Wert, unterhalb dessen eine gleichmäßige Anströmung einer großen Durchtrittsfläche aus einem verhältnismäßig engen Kanal nicht mehr gegeben ist. In die Fig. 1 sind in einem Kurvenzug gemessene lokale, maximale Geschwindigkeitsunterschiede gegen den dimensionslosen Druckverlust Zeta aufgetragen. Diese Verhältnisse wurden an einem maßstäblichen Modell überprüft, in dem ein Gas aus einem 0,04 m² im Querschnitt messenden Kanal längs einer Strecke von rd. 200 mm auf eine Anströmfläche von rd. 2,25 m² gespreizt wurde. Der Druckwiderstand wurde durch unterschiedlich dichte Drahtgewebe simuliert. Hinter diesem Drahtgewebe wurden Netzmessungen der Strömungsgeschwindigkeit durchgeführt. Diese Messungen am Modell lassen sich auf die technisch auszuführende Adsorptionsapparate übertragen.

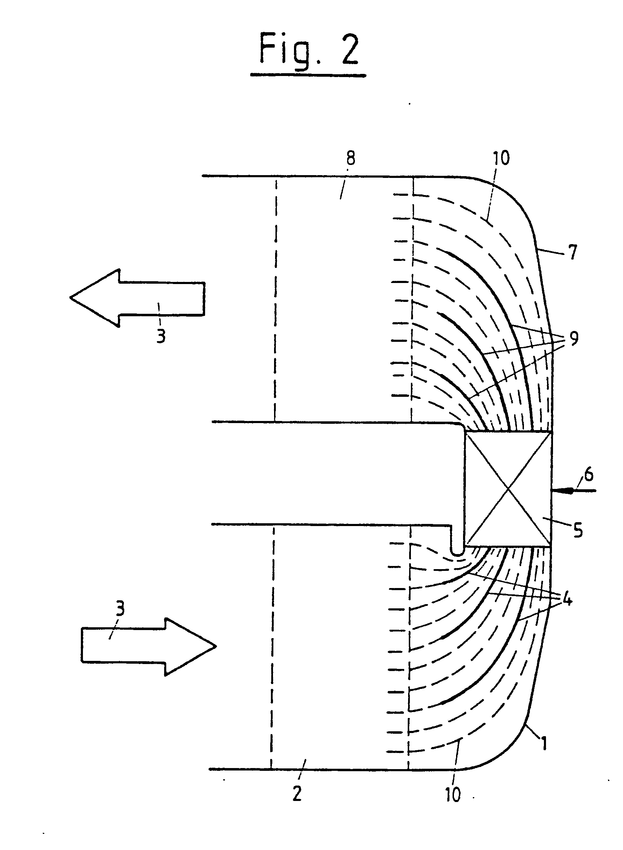

Ein Ausführungsbeispiel ist in der Zeichnung dargestellt und wird im folgenden näher beschrieben. Es zeigt Fig. 2 ein zweidimensionales Strömungsmodell zur Darstellung des Verlaufs der Potentialströmung. Es entspricht dem Schnittbild einer Anordnung eines Abströmkanals 1 hinter einem ersten Wanderbett 2, das in Pfeilrichtung 3 bestromt wird. Die Stromlinien der Potentialströmung werden in der Praxis durch Anfärbung sichtbar gemacht. Trennbleche 4 im Anströmbereich einer Prozeßkammer 5 beispielsweise einer Zumischkammer mit einer Zuleitung 6 werden nun entlang der Potentiallinien angeordnet. Die Zahl der Trennbleche wird nach dem gewünschten Homogenitätsgrad der Anströmung festgelegt.

Im Anströmkanal 7 des zweiten Wanderbettes 8 kommt es besonders darauf an, durch Trennwände 9 fluiddynamisch günstige Diffusoren herzustellen, so daß neben einer gleichmäßigen Abströmung auch ein Druckwiedergewinn erzielt wird. Die Zahl der notwendigen Trennwände wird wesentlich mitbestimmt von dem Verhältnis der Abströmfläche der Prozeßkammer 5 zu der Anströmfläche des zweiten Wanderbettes 8. Unter Berücksichtigung der Ähnlichkeitsgesetze werden die in den zweidimensionalen Strömungsmodellen über verschiedene Schnitte der geometrischen Anordnung gefundenen Linien der Potentialströmung und der darin festgelegten Anordnung der Trennwände auf die technische Anlage übertragen.

Ganz analoges Vorgehen ergibt sich für den Anströmkanal des ersten Bettes 2, wenn aus einem engen Rauchgaskanal auf kurze Distanz auf einen großen Bettquerschnitt die Gasströmung verlangsamt wird.

## Patentansprüche

1. Vorrichtung zur Reinigung von Gasströmen, insbesondere von Rauchgasen aus Feuerungsanlagen, mit mehrstufiger Entschwefelung und zwischengeschalteter Entstickung in quer angeströmten Wanderbetten aus körnigen, kohlenstoffhaltigen Materialien und längsdurchströmter Zumischkammer für Entstickungsmittel, wobei

zwischen der Austrittsebene des ersten Wanderbettes und der Zumischkammereintrittsebene mehrere düsenwirksame Kanäle mittels Trennwänden (4) und

zwischen Zumischkammeraustrittsebene und der Eintrittsebene des zweiten Wanderbettes mehrere diffusorwirksame Kanäle mittels Trennwänden (9) ausgebildet sind,

**dadurch gekennzeichnet,** daß für die Kanäle bei gegebener Kanallänge die Zahl der Kanäle bzw. die Zahl der Trennwände so gewählt wird, daß für mindestens einen entstandenen Kanal der Ausdruck

$$0,01 < \frac{\left|\, \text{Austrittsweite - Eintrittsweite} \,\right|}{2 \times \text{Kanallänge}} < 0,15$$

erfüllt ist und der Ausdruck für die Kanalerweiterungen oder für die Kanalverengungen gilt.

2. Vorrichtung nach Anspruch 1,

**dadurch gekennzeichnet,** daß die kanalbildenden Trennwände ausgerichtet sind in Richtung der Stromlinien

4

der Potentialströmung.

3. Vorrichtung nach Anspruch 1 ,
**dadurch gekennzeichnet,** daß die kanalbildenden Trennwände in Richtung der Stromlinien der Potentialströmung gekrümmt sind.

## Claims

1. Device for the purification of gas streams, particularly gas from furnaces, with multi-stage desulphurization and intercalated NOx removal in moving beds of granular carbonaceous materials which are penetrated by a transverse gas stream, and with a mixing chamber penetrated by a longitudinal stream for the NOx removing agent,
a number of jet-type ducts being obtained by providing partitions (4) between the outlet plane of the first moving bed and the inlet plane of the mixing chamber and
a number of diffusor-type ducts being obtained by providing partitions (9) between the outlet plane of the mixing chamber and the inlet plane of the second moving bed,
**characterized in that** for a given duct length, the number of ducts and the number of partitions are selected so as to ensure that at least one of these ducts satisfies the formula below :

$$0{,}01 < \frac{\left|\ \text{outlet opening - inlet opening}\ \right|}{2 \times \text{duct length}} < 0{,}15$$

and in that said formula applies to the duct enlargements or restrictions, respectively.

2. Device according to claim 1,
**characterized in that** the partitions required to form a duct are aligned in the direction of the flow lines of the potential stream.

3. Device according to claim 1,
**characterized in that** the partitions required to form a duct are curved in the direction of the flow lines of the potential stream.

## Revendications

1. Dispositif pour le traitement de courants de gaz, en particulier gaz de fumée sortant des installations de chauffe industrielles, à l'aide d'une désulfuration multi-étagée et d'une dénitrification intercalée qui ont lieu dans des lits mobiles de granulés carboniques à courant transversal et dans une chambre de mélange à courant longitudinal destinée à l'apport de l'agent de dénitrification,
la sortie du premier lit mobile étant connectée à l'entrée de la chambre de mélange au moyen de plusieurs gaines dont chacune consiste en plusieurs cloisons (4) et qui fonctionnent comme des tuyères,
la sortie de la chambre de mélange étant liée à l'entrée du deuxième lit mobile au moyen de plusieurs gaines dont chacune consiste en plusieurs cloisons (9) et qui fonctionnent comme des diffuseurs,
**caractérisé en ce que,** pour une longueur de gaine déterminée, le nombre de cloisons et de gaines est choisi de telle sorte qu'au moins une gaine correspond à la formule ci-dessous :

$$0{,}01 < \frac{\left|\ \text{ouverture de sortie - ouverture d'entrée}\ \right|}{2 \times \text{longuer de gaine}} < 0{,}15$$

et que ladite formule est aussi appliquée aux élargissements ou bien aux étranglements des gaines.

2. Dispositif selon la revendication 1,
**caractérisé en ce que** les cloisons qui forment les gaines sont alignés au sens d'écoulement des lignes aérodynamqiues du potentiel.

5

3. Dispositif selon la revendication 2,
**caracterisé en ce que** les cloisons qui forment les gaines sont courbés par rapport au sens d'écoulement des lignes aérodynamiques du potentiel.

# Fig. 1

$$\zeta = \Delta p / (\rho / 2 \cdot v \exp 2)$$

# Fig. 2